# EUROPEAN PATENT SPECIFICATION

(11) **EP 3 755 014 B1**
(45) Date of publication and mention of the grant of the patent: **31.05.2023**
(21) Application number: 18906045.2
(22) Date of filing: 29.12.2018
(51) Int. Cl.: H04W 4/24, H04L 12/14, H04M 15/00

(54) **CHARGING METHOD, COMPUTER STORAGE MEDIUM AND SESSION MANAGEMENT ENTITY**
ABRECHNUNGSVERFAHREN, COMPUTERSPEICHERMEDIUM UND SITZUNGSVERWALTUNGSEINHEIT
PROCÉDÉ DE FACTURATION, SUPPORT DE STOCKAGE INFORMATIQUE ET ENTITÉ DE GESTION DE SESSION

(30) Priority: 13.02.2018 CN 201810150941
(43) Date of publication of application: 23.12.2020
(73) Proprietor: ZTE Corporation, Shenzhen, Guangdong 518057 (CN)
(72) Inventor: YANG, Minggui, Shenzhen, Guangdong 518057 (CN); LIN, Kai, Shenzhen, Guangdong 518057 (CN); CHEN, Sheng, Shenzhen, Guangdong 518057 (CN)
(74) Representative: Lavoix
(86) International application number: PCT/CN2018/125532
(87) International publication number: WO 2019/157873

(56) References cited:
- EP-A1- 3 657 827
- WO-A1-2017/211289
- WO-A1-2017/219895
- CN-A- 107 547 212
- CN-A- 107 548 046
- ANONYMOUS: "3rd Generation Partnership Project; Technical Specification Group Services and System Aspects; Telecommunication management; Charging management; Study on charging aspects of 5G system architecture phase 1 (Release 15)", 3GPP STANDARD; TECHNICAL REPORT; 3GPP TR 32.899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.0.0, 31 January 2018 (2018-01-31), pages 1-104, XP051392332,
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.5.0, 13 November 2017 (2017-11-13), pages 1-170, XP051391712, [retrieved on 2017-11-13]
- ANONYMOUS: "3rd Generation Partnership Project; Technical Specification Group Services and System Aspects; Study on Architecture for Next Generation System (Release 14)", 3GPP STANDARD ; TECHNICAL REPORT ; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1-527, XP051295448, [retrieved on 2016-12-16]

## Description

This application claims priority to a Chinese patent application No. 201810150941.1 filed on February 13, 2018.

### TECHNICAL FIELD

The present application relates to the field of wireless communications, for example, relates to a charging method, computer storage medium and a session management function.

### BACKGROUND

In the 4th generation mobile communication technology (4G) system, a public data network (PDN) Gate Way (PGW) has session management and message forwarding functions, and online charging is implemented by interactions between the PGW and an online charging system (OCS).

In the 5th generation (5G) system, session management is implemented in a session management function (SMF) and message forwarding is performed in a user plane function (UPF). Since the session management is separate from the message forwarding, an online charging manner in the 4G system is not applicable to the 5G system.

Therefore, how to achieve accurate charging in the 5G systems is a problem to be solved.

Document 1 "Study on charging aspects of 5G system architecture phase 1 (Release 15)", studies the charging architecture, principles and functionalities for a 5G System Phase 1 specified in TS 23.501 [201] and TS 23.502 [202], based on the TR 23.799 [200] conclusions. The stage 1 requirements from TS 22.115 [101] and TS 22.261 [102] are also input for this study. The charging architecture and functionalities are studied for the set of features and capabilities supported by the 5G System Phase 1, and for interworking scenarios between the 5G System and existing systems as well. Evolution of charging mechanisms and charging models to support the Third Parties are investigated. The study provides a prioritisation between the different features, if evaluated as necessary, to allow a potential phased approach for the normative work.

Document 2 (EP3657827A1) discloses a charging method and device for a mobile communication system, and a storage medium. The method includes: sending charging parameter information corresponding to each forwarding device to an online charging system respectively during a charging session such that the online charging system returns a charging strategy set for each forwarding device respectively; and sending each returned charging strategy to a corresponding forwarding device such that each forwarding device charges a user for data volume according to the charging strategy corresponding to the each forwarding device.

Document 3 "System Architecture for the 5G System; Stage 2 (Release 15)" defines the Stage 2 system architecture for the 5G System. The 5G System provides data connectivity and services. This document covers both roaming and non-roaming scenarios in all aspects, including interworking between 5GS and EPS, mobility within 5GS, QoS, policy control and charging, authentication and in general 5G System wide features e.g. SMS, Location Services, Emergency Services.

While the above publications may achieve their intended purposes, there is still a need for a new and improved charging method and device and session management entity.

### SUMMARY

The present application provides a charging method, a computer storage medium and a session management function, which can implement accurate charging in a communication system where a control plane is separate from a user plane.

An embodiment of the present application provides a charging method which is applied to a session management function (SMF). The method includes: creating a session with an online charging system (OCS), by the SMF, for each of multiple user plane function (UPFs) which carry user equipment service traffic, and assigning different session identifiers and a unified charging identifier to sessions with a charging association; and sending an online charging message to the OCS for any one session in the sessions with the charging association, where the online charging message carries a session identifier of the any one session and the charging identifier; and the unified charging identifier comprises, a charging identifier sequence number and an identifier of a network element which creates the charging identifier sequence number.

An embodiment of the present application provides a session management function, which includes a memory, a processor and a charging program stored in the memory and executable by the processor, where the charging program, when executed by the processor, implements the charging method described above.

An embodiment of the present application provides a computer-readable storage medium, which is configured to store a charging program which, when executed by a processor, implements the charging method described above.

### BRIEF DESCRIPTION OF DRAWINGS

FIG. 1 is a schematic diagram of network architecture (having an uplink classifier) in a 5G communication system in the related art;
FIG. 2 is a flowchart of a charging method according to embodiment 1 of the present application;
FIG. 3 is a schematic diagram of a charging device according to embodiment 2 of the present application;
FIG. 4 is a flowchart of a charging process in a common non-roaming scenario in example 3 of the present application;
FIG. 5 is a flowchart of a charging process in a scenario of service session connection (SSC) mode 2 in example 4 of the present application;
FIG. 6 is a flowchart of a charging process in a scenario of SSC mode 3 in example 5 of the present application;
FIG. 7 is a flowchart of a charging process in a scenario where an uplink classifier exists and an anchor is separate from a branch point in example 6 of the present application;
FIG. 8 is a flowchart of a charging process in a scenario where an uplink classifier exists and an anchor is integrated with a branch point in example 7 of the present application;
FIG. 9 is a flowchart of a charging process in a scenario of non-roaming traffic offloaded onto MEC in example 8 of the present application;
FIG. 10 is a flowchart of a charging process in a roaming scenario in example 9 of the present application;
FIG. 11 is a flowchart of a charging process in a scenario where an uplink classifier exists and roaming traffic is locally offloaded in example 10 of the present application; and
FIG. 12 is a flowchart of a charging process in a scenario where roaming traffic is locally offloaded through MEC in example 11 of the present application.

### DETAILED DESCRIPTION

Embodiments of the present application will be described hereinafter in detail with reference to the drawings. It is to be noted that if not in collision, the embodiments and features therein in the present application may be combined with each other.

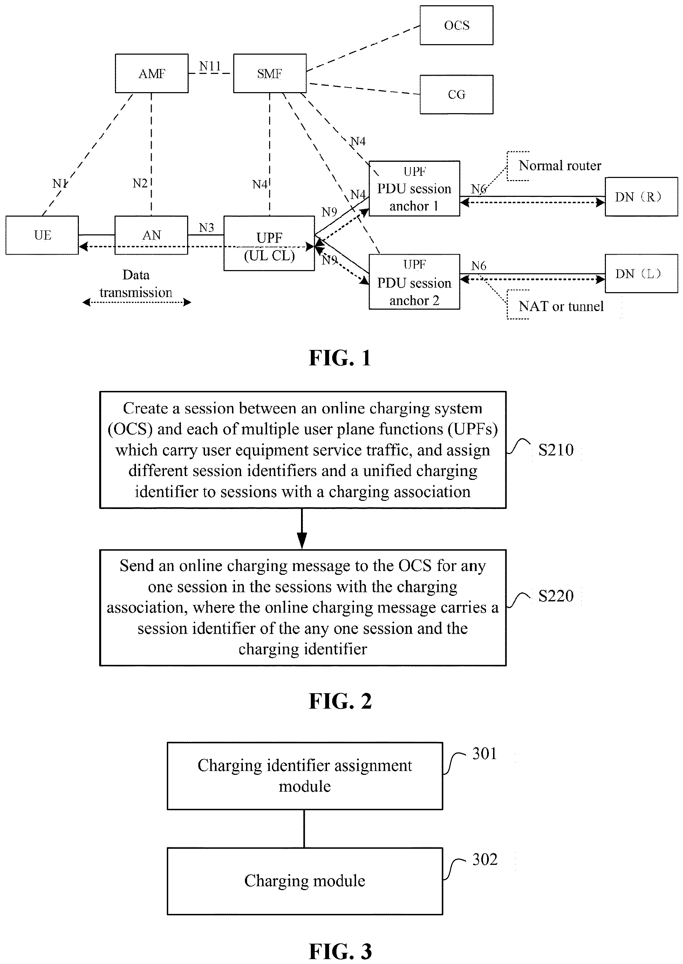

As shown in FIG. 1, in a 5th generation (5G) system, an access and mobility management function (AMF) undertakes user access and mobility management, a session management function (SMF) undertakes session management, a user plane function (UPF) undertakes traffic forwarding, an OCS undertakes online charging, and a charging gateway (CG) undertakes offline charging. A user terminal accesses a network through an access network (AN), the AMF performs an access and the SMF creates sessions, the UPF undertakes the traffic forwarding, collects charging information and sends the collected charging information to the SMF, and the SMF generates charging bills for the CG and the OCS. In the 5G system, the session management is implemented by the SMF and message forwarding is performed by the UPF. Since the session management is separate from the message forwarding, an online charging manner in a 4G system is not applicable to the 5G system. Especially, when an uplink classifier (UL CL), multi-homing and other technologies are introduced in the 5G system, for a same protocol data unit (PDU) session, services may exist on UPF anchor 1 and UPF anchor 2 simultaneously, and one SMF needs to simultaneously manage multiple UPFs during one session to achieve online charging.

### Embodiment 1

As shown in FIG. 2, an embodiment of the present application provides a charging method which is applied to a session management function (SMF). The method includes step S210 and step S220.

In step S210, a session with an online charging system (OCS) is created for each of multiple user plane functions (UPFs) which carry user equipment service traffic, and different session identifiers and a unified charging identifier are assigned to sessions with a charging association.

In step S220, an online charging message is sent to the OCS for any one session in the sessions with the charging association, where the online charging message carries a session identifier of the any one session and the charging identifier.

In the embodiment, after the session is successfully created, charging granularity may be based on anchor UPF, and the number of sessions between the SMF and the OCS is the same as the number of anchor user plane functions (UPFs).

In an implementation, the online charging message is a Credit Control Request(Termination) (CCRt) message.

In an implementation, the charging identifier includes a charging identifier sequence number and an identifier of a network element which creates the charging identifier sequence number.

The charging identifier sequence number ensures that a digital sequence is not repeated within a network range managed by the network element. The identifier of the network element can ensure that the charging identifier is not repeated in an entire network.

For example, the identifier of the network element of the SMF is ChinaMobile-BeiJing02, the charging identifier sequence number generated by the SMF is "12345", and then a complete form of the charging identifier is "ChinaMobile-BeiJing02-12345".

In an implementation, the charging identifier may be transferred through at least one of a request message or a response message between network elements, where the request message may be regarded as a forward transfer and the response message may be regarded as a backward transfer.

In an implementation, in a scenario of service session connection (SSC) mode 2 or SSC mode 3, the sessions with the charging association include a first session corresponding to a first anchor UPF before session switching and a second session corresponding to a second anchor UPF after the session switching.

In an implementation, in the scenario of service session connection (SSC) mode 2 or SSC mode 3, the method further includes that the SMF sends offline charging bills to a charging gateway (CG) separately for the first session and the second session with the charging association to count traffic information before the session switching and traffic information after the session switching separately.

In an implementation, in a scenario of non-roaming and an uplink classifier, the sessions with the charging association include sessions corresponding to multiple anchor UPFs carrying service traffic split by the uplink classifier into flows.

In an implementation, in the scenario of the non-roaming and the uplink classifier, the method further includes a step described below. If the SMF receives trigger indication information sent by the OCS and a trigger corresponding to the trigger indication information is related to notifying the OCS of a change of the uplink classifier, or the SMF is locally configured with a service rule for notifying the OCS of the change of the uplink classifier, the SMF, after inserting the uplink classifier, notifies the OCS that the uplink classifier has been inserted for uplink services, and receives a new traffic quota re-delivered by the OCS for a session that already exists before the uplink classifier is inserted.

In an implementation, in the scenario of the non-roaming and the uplink classifier, the method further includes that the SMF sends an offline charging bill to the charging gateway (CG) for each of the sessions with the charging association to count information about traffic carried by each of the multiple anchor UPFs.

In an implementation, in the scenario of the non-roaming and the uplink classifier, the uplink classifier is independently disposed on one UPF or one UPF is reused by one anchor UPF and the uplink classifier.

In an implementation, in the scenario of the non-roaming and the uplink classifier, the method further includes that the SMF sends an offline charging bill to the charging gateway (CG) for the uplink classifier to count information about traffic assigned by the uplink classifier to each of the multiple anchor UPFs.

In an implementation, in a scenario of non-roaming traffic offloaded onto a mobile edge computing (MEC), the sessions with the charging association includes a first session corresponding to a first anchor UPF carrying a part of service traffic and a second session corresponding to a second UPF serving as the MEC and carrying the other part of the service traffic.

In an implementation, in a scenario of roaming traffic locally offloaded through a visit anchor UPF, the sessions with the charging association include a first session corresponding to a home anchor UPF carrying partial roaming traffic and a second session corresponding to the visit anchor UPF carrying the roaming traffic locally offloaded in a roaming area.

In a scenario of roaming traffic locally offloaded through a mobile edge computing (MEC) in a roaming area, the sessions with the charging association include a first session corresponding to a home anchor UPF carrying partial roaming traffic and a second session corresponding to the MEC in the roaming area carrying the roaming traffic locally offloaded in the roaming area.

In an implementation, in the scenario of the roaming traffic locally offloaded through the visit anchor UPF or the mobile edge computing (MEC) in the roaming area, the method further includes a step described below. When the SMF is a visit SMF, the visit SMF sends an offline charging bill to the charging gateway (CG) to count information about the roaming traffic carried by the home anchor UPF and information about the roaming traffic locally offloaded through the visit anchor UPF or the MEC in the roaming area. When the SMF is a home SMF, the home SMF sends an offline charging bill to the charging gateway (CG) to count the information about the roaming traffic carried by the home anchor UPF.

### Embodiment 2

As shown in FIG. 3, an embodiment of the present application provides a charging device which is applied to a session management entity (SMF). The device includes a charging identifier assignment module 301 and a charging module 302.

The charging identifier assignment module 301 is configured to create a session with an online charging system (OCS) for each of multiple user plane functions (UPFs) which carry user equipment service traffic, and assign different session identifiers and a unified charging identifier to sessions with a charging association.

The charging module 302 is configured to send an online charging message to the OCS for any one session in the sessions with the charging association, where the online charging message carries a session identifier of the any one session and the charging identifier.

In an implementation, in a scenario of service session connection (SSC) mode 2 or SSC mode 3, the sessions with the charging association include a first session corresponding to a first anchor UPF before session switching and a second session corresponding to a second anchor UPF after the session switching.

In an implementation, in the scenario of service session connection (SSC) mode 2 or SSC mode 3, the charging module is further configured to send offline charging bills to a charging gateway (CG) separately for the first session and the second session with the charging association to count traffic information before the session switching and traffic information after the session switching separately.

In an implementation, in a scenario of non-roaming and an uplink classifier, the sessions with the charging association include sessions corresponding to multiple anchor UPFs carrying service traffic split by the uplink classifier into flows.

In an implementation, in the scenario of the non-roaming and the uplink classifier, the device further includes a trigger processing module.

If the SMF receives trigger indication information sent by the OCS and a trigger corresponding to the trigger indication information is related to notifying the OCS of a change of the uplink classifier, or the SMF is locally configured with a service rule for notifying the OCS of the change of the uplink classifier, after the SMF inserts the uplink classifier, the trigger processing module is configured to notify the OCS that the uplink classifier has been inserted for uplink services, and receive a new traffic quota re-delivered by the OCS for a session that already exists before the uplink classifier is inserted.

In an implementation, in the scenario of the non-roaming and the uplink classifier, the charging module is further configured to send an offline charging bill to the charging gateway (CG) for each of the sessions with the charging association to count information about traffic carried by each of the multiple anchor UPFs.

In an implementation, in the scenario of the non-roaming and the uplink classifier, the charging module is further configured to send an offline charging bill to the charging gateway (CG) for the uplink classifier to count information about traffic assigned by the uplink classifier to each of the multiple anchor UPFs.

In an implementation, in a scenario of non-roaming traffic offloaded onto a mobile edge computing (MEC), the sessions with the charging association include a first session corresponding to a first anchor UPF carrying a part of service traffic and a second session corresponding to a second UPF serving as the MEC and carrying the other part of the service traffic.

In an implementation, in a scenario of roaming traffic locally offloaded through a visit anchor UPF, the sessions with the charging association include a first session corresponding to a home anchor UPF carrying partial roaming traffic and a second session corresponding to the visit anchor UPF carrying the roaming traffic locally offloaded in a roaming area.

In a scenario of roaming traffic locally offloaded through a mobile edge computing (MEC) in a roaming area, the sessions with the charging association include a first session corresponding to a home anchor UPF carrying partial roaming traffic and a second session corresponding to the MEC in the roaming area carrying the roaming traffic locally offloaded in the roaming area.

In an implementation, in the scenario of the roaming traffic locally offloaded through the visit anchor UPF or the mobile edge computing (MEC) in the roaming area, the charging module is further configured to: when the SMF is a visit SMF, send an offline charging bill to the charging gateway (CG) to count information about the roaming traffic carried by the home anchor UPF and information about the roaming traffic locally offloaded through the visit anchor UPF or the MEC in the roaming area; or when the SMF is a home SMF, send an offline charging bill to the charging gateway (CG) to count the information about the roaming traffic carried by the home anchor UPF.

In an implementation, the charging identifier includes a charging identifier sequence number and an identifier of a network element which creates the charging identifier sequence number.

In an implementation, the charging identifier is transferred through at least one of a request message or a response message between network elements.

### Embodiment 3

An embodiment of the present application provides a session management function, which includes a memory, a processor and a charging program stored in the memory and executable by the processor, where the charging program, when executed by the processor, implements the charging method according to embodiment 1.

### Embodiment 4

An embodiment of the present application provides a computer-readable storage medium, which is configured to store a charging program which, when executed by a processor, implements the charging method according to embodiment 1.

Compared with the related art, the present application provides the charging method, the charging device and the session management function, where the session management function creates the session with the online charging system (OCS) for each of the multiple user plane function (UPFs) which carry the user equipment service traffic, and assigns the different session identifiers and the unified charging identifier to the sessions with the charging association; and the session management function sends the online charging message to the OCS for any one session in the sessions with the charging association, where the online charging message carries the session identifier of the any one session and the charging identifier. The present application can implement accurate charging in a communication system in which a control plane is separate from a user plane.

Solutions of a 5G charging method in various scenarios are described below in detail through some examples.

### Example 1

A method for generating a charging identifier in a 5G system is described in the example.

In the related art, a charging identifier (ChargingID) in a 4G system is generated by a PGW and is generally a string of numbers unique within a network element. In the case of roaming, although the ChargingID also needs to be transferred from the PGW to the serving gateway (SGW) in 4G protocols, only the method for generating the ChargingID by the PGW will not cause conflicts or ambiguity of the ChargingID during online charging in the 4G system since the SGW does not support the online charging and there is no interface between the SGW and an online charging system (OCS).

However, under a 5G framework, an SMF performs session management, and both a visit SMF and a home SMF may trigger the OCS to generate call detail records (CDRs). Therefore, although the ChargingID generated in a 4G manner is locally unique within the network element, the ChargingID cannot meet the requirement of global uniqueness in an entire network.

In the charging method in the 5G system in the example, the ChargingID includes a ChargingID sequence number and an identifier of a corresponding network element which generates the sequence number (Generator-Host-Name). The Generator-Host-Name ensures that there is no conflict between SMFs in the entire network, and a Node-Id may be used. The sequence number ensures that a digital sequence in the SMF is not repeated. The ChargingID generated in this way is unique in the entire network. For example, the Generator-Host-Name of the SMF is ChinaMobile-BeiJing02, the ChargingID sequence number generated by the SMF is "12345", and then a complete form of the ChargingID is "ChinaMobile-BeiJing02-12345".

### Example 2

A method for transferring a charging identifier in a 5G system is described in the example.

In the related art, a ChargingID in a 4G system is generated by a PGW and transferred to an SGW, that is to say, the ChargingID will only be reversely transferred in a Create Session Response message from the PGW to the SGW (PGW→SGW).

However, under a 5G framework, how to transfer a ChargingID between multiple SMFs needs to be reconsidered due to scenarios such as roaming and local offloading of traffic. In a roaming scenario, a home SMF (Home-SMF) assigns a ChargingID, and transfers the ChargingID to a visit SMF (Visit-SMF) through a Create PDU Session Response message. When the visit SMF triggers a mobile edge computing (MEC) or another SMF, the ChargingID may be transferred to the MEC or the other SMF through a Create PDU Session Request message. In a non-roaming scenario, after the SMF generates the ChargingID, the MEC may be triggered by a Create PDU Session Request and the ChargingID is transferred to the MEC. Therefore, in the 5G system, the charging problem in a traffic offload scenario can be solved through forward and backward transfers of the ChargingID.

### Example 3

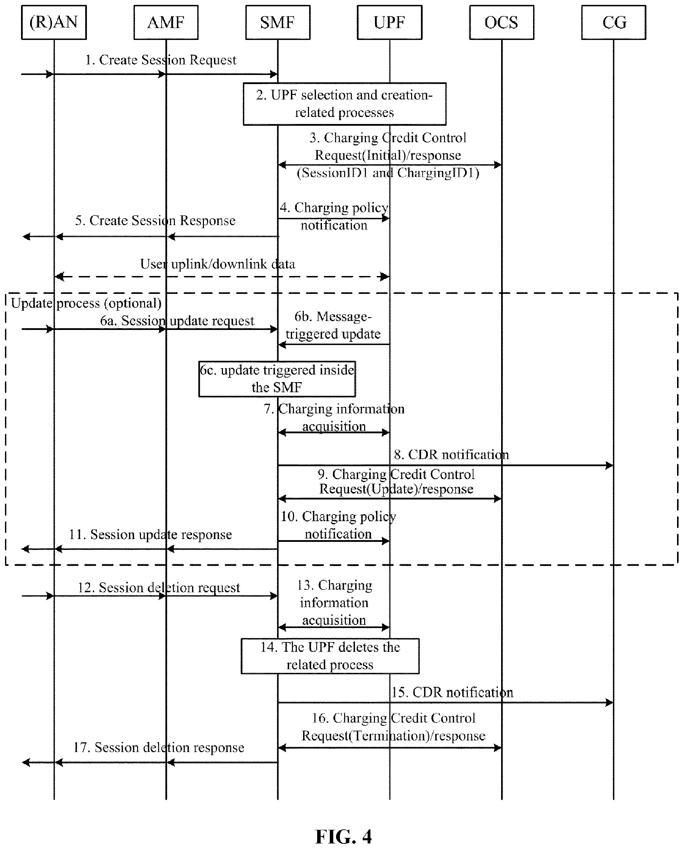

As shown in FIG. 4, a charging process in a non-roaming scenario may include steps (1) to (17) described below.
(1) A user uses a data service, a user equipment (UE) initiates a Create PDU Session Request which is transferred to an SMF through a radio access network (RAN) and an authentication management function (AMF), and the SMF generates ChargingID1, SessionID1 and other data. A method for generating ChargingID 1 may be a method in example 1.
(2) The SMF selects a UPF and creates a user plane channel for the user.
(3) The SMF sends a Credit Control Request(Initial) (CCRi) message carrying ChargingID1, SessionID1 and other data to an OCS; after receiving the request, the OCS performs credit authorization on the user according to user information. A quota of the user, a Trigger-Type and other information are carried.
   A 3rd Generation Partnership Project (3GPP) TS 32299 protocol (Diameter protocol charging standard) defines whether to report an attribute type and an attribute value pair (AVP) of the Trigger-Type of the OCS when a charging condition changes. The AVP is a method for uniformly encoding the attribute type and an attribute value. The present application may extend a type of the Trigger-Type in scenarios such as an uplink classifier for a 5G system.
(4) After receiving a response to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF forwards the response to the UE through the RAN, and session creation is completed.
   During the user uses the data service, in case of an update process, the process proceeds to (6), otherwise proceeds to (12).
(6) The update process is initiated in various ways, for example, (6a) the user position changes, etc. and the update process is initiated by the user, (6b) a charging trigger condition is reached, etc. and the update process is initiated by the UPF, and (6c) an internal charging condition of the SMF changes, etc..
(7) The SMF determines that a charging notification needs to be triggered, and the SMF needs to acquire from the UPF user plane-related charging information such as traffic, time and events.
(8) The SMF generates an SMF-Anchor CDR and sends it to a charging gateway (CG). The CDR carries UPF address information.
(9) The SMF sends a Credit Control Request(Update) (CCRu) message to the OCS; after receiving the request, the OCS performs deductions, re-ratings and other processing and performs new credit authorization on the user.
(10) The SMF notifies the UPF of new charging policies, and the UPF updates the charging policies. In case of a user-triggered update process, the process proceeds to (11), otherwise proceeds to (12), and the update process ends.
(11) The SMF sends an update response to the AMF, and the AMF sends it to the UE through the RAN.
   (Note: The update process is similar to a deletion process in terms of charging policies and processes. The optional update process is not repeated hereinafter in other examples.)
(12) The UE initiates a session deletion request to the SMF through the RAN and the AMF.
(13) The SMF acquires from the UPF the user plane-related charging information.
(14) The SMF notifies the UPF to delete the session-related process.
(15) The SMF generates the SMF-Anchor CDR according to information acquired in the above step and sends it to the charging gateway (CG). The CDR carries the UPF address information and the CDR is closed.
(16) The SMF sends a Credit Control Request(Termination) (CCRt) message carrying related charging information to the OCS and terminates a session with the OCS.
(17) The SMF sends a session deletion response to the AMF, and the AMF sends it to the UE through the RAN. The process ends.

### Example 4

In a scenario of service session connection (SSC) mode 2, an original PDU session is released, and then a new PDU session is re-created. An SMF keeps ChargingID of CDRs generated in two PDU sessions before and after session switching unchanged, so as to be able to check all CDRs in a current service of a user through one ChargingID.

A SessionID for online charging at an OCS interface and offline charging at a CG interface remain consistent with a UPF, that is, after the old session is deleted, the SMF sends a CDR to a CG to end the offline charging session, and the SMF sends a charging Credit Control Request(Termination) (CCRt) to an OCS to end the online charging session (the old session). An original ChargingID is still used for creating the new session. After a new UPF is created, the SMF will open a new offline CDR, and meanwhile the SMF sends a Credit Control Request(Initial) (CCRi) message carrying a new SessionID to the OCS to start the new session.

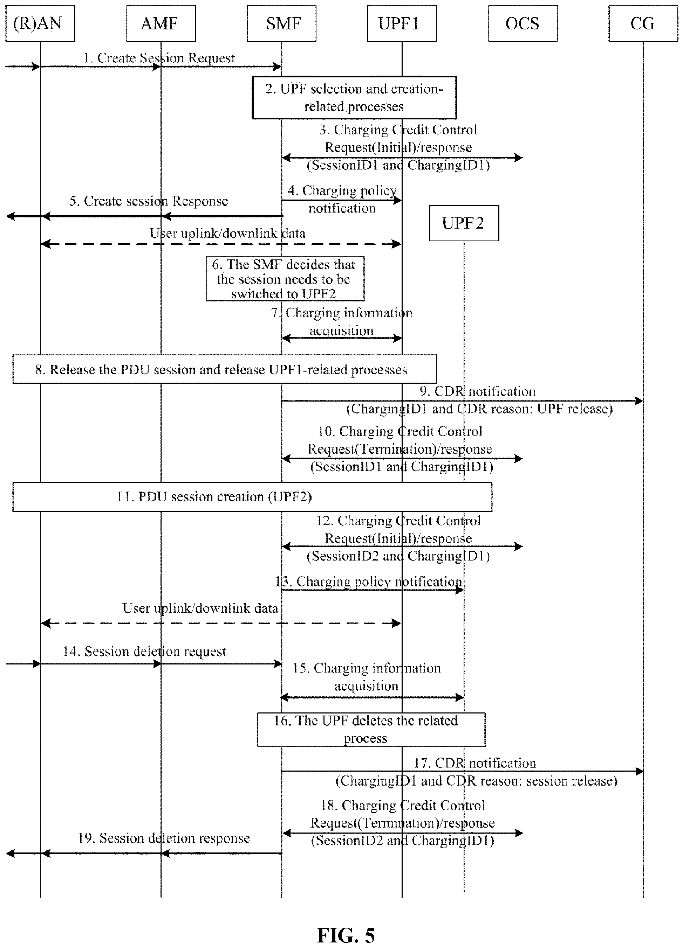

As shown in FIG. 5, a charging process may include steps (1) to (19) described below.
(1) The user uses a data service, a UE initiates a Create PDU Session Request which is transferred to the SMF through a RAN and an AMF, and the SMF generates ChargingID 1, SessionID1 and other data.
   A method for generating ChargingID 1 may be a method in example 1.
(2) The SMF selects a UPF and creates a user plane channel for the user.
(3) The SMF sends the Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(4) After receiving a response to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF forwards the response to the UE through the RAN, and session creation is completed.
(6) A user plane path needs to be switched since the user position moves, etc., and the SMF decides that a user plane session needs to be switched from UPF1 to UPF2 in SSC mode 2.
(7) The SMF acquires from UPF1 user plane-related charging information such as traffic, time and events.
(8) The SMF notifies UPF1 to delete the session-related process.
(9) The SMF generates an SMF-Anchor CDR according to information acquired in the above step and sends it to the charging gateway (CG). The CDR carries UPF1 address information and ChargingID1, and the CDR is closed due to a UPF release.
(10) The SMF sends a Credit Control Request(Termination) (CCRt) carrying related charging information (the UPF1 address information, ChargingID1, SessionID1 and the like) to the OCS and terminates charging of data messages on UPF1.
(11) Under control of the SMF, a PDU session to UPF2 is created, where the re-established PDU session needs to use the original ChargingID1.
(12) The SMF sends a Credit Control Request(Initial) (CCRi) to re-create a session with the OCS, where a SessionID is SessionID2 and ChargingID1 remains unchanged. The OCS sends a response to the Credit Control Request(Initial) (CCRi) to the SMF after receiving the request and performing processing.
(13) The SMF notifies UPF2 of new charging policies, and UPF2 uses the charging policies for statistics.
   At this time, uplink and downlink data of the user are forwarded through UPF2.
(14) The UE initiates a session deletion request to the SMF through the RAN and the AMF.
(15) The SMF acquires from UPF2 the user plane-related charging information.
(16) The SMF notifies UPF2 to delete the session-related process.
(17) The SMF generates an SMF-Anchor CDR according to information acquired in the above step and sends it to the charging gateway (CG). The CDR carries UPF2 address information, and the CDR is closed due to a session release.
(18) The SMF sends a Credit Control Request(Termination) (CCRt) message carrying related charging information (SessionID2, ChargingID1, the UPF2 address information and other parameters) to the OCS and terminates the session with the OCS.
(19) The SMF sends a session deletion response to the AMF, and the AMF sends it to the UE through the RAN. The process ends.

### Example 5

In a scenario of SSC mode 3, a new PDU session is re-created and then an original PDU session is released. An SMF keeps ChargingID of CDRs generated in two PDU sessions before and after session switching unchanged, so as to be able to check all CDRs in a current service of a user through one ChargingID.

An original ChargingID is still used for creating the new session. After a new UPF is created, the SMF will open a new offline CDR, and meanwhile the SMF sends a Credit Control Request(Initial) (CCRi) carrying a new SessionID to an OCS to start the new session.

After the old session is deleted, the SMF sends the CDR to a CG to end the offline charging session, and the SMF sends a charging Credit Control Request(Termination) (CCRt) to the OCS to end the online charging session (the old session).

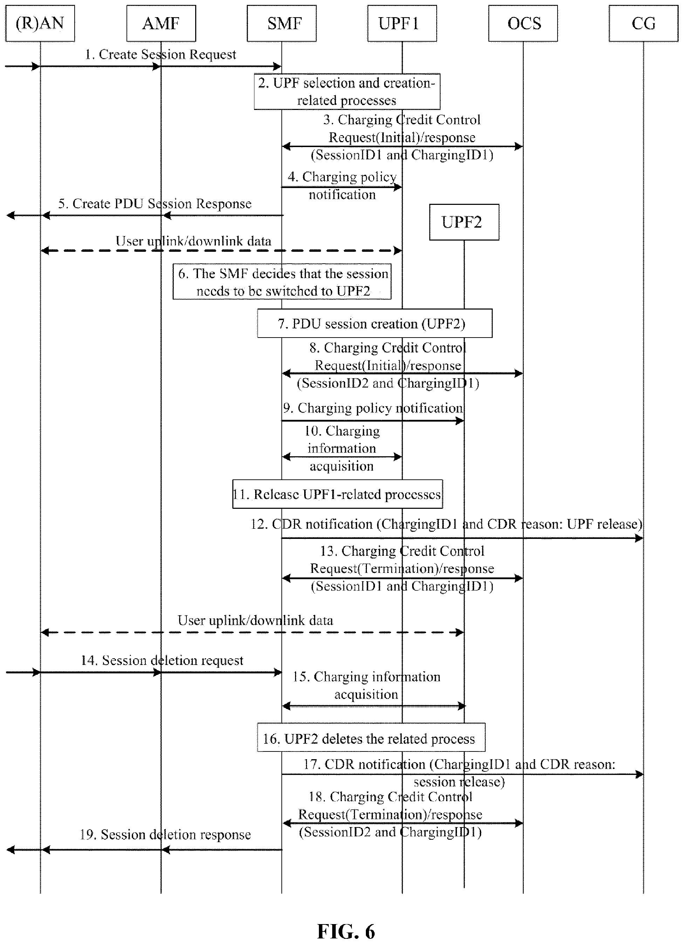

As shown in FIG. 6, a charging process in the scenario of SSC mode 3 may include steps (1) to (19) described below.
(1) The user uses a data service, a UE initiates a Create PDU Session Request which is transferred to the SMF through a RAN and an AMF, and the SMF generates ChargingID 1, SessionID1 and other data.
   A method for generating ChargingID 1 may be a method in example 1.
(2) The SMF selects a UPF and creates a user plane channel for the user.
(3) The SMF sends the Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(4) After receiving a response to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF forwards the response to the UE through the RAN, and session creation is completed.
(6) A user plane path needs to be switched since the user position moves, etc., and the SMF decides that a user plane session needs to be switched from UPF1 to UPF2 in SSC mode 3.
(7) Under control of the SMF, a PDU session to UPF2 is created.
(8) The SMF sends a Credit Control Request(Initial) (CCRi) to re-create a session with the OCS, where a SessionID is SessionID2 and ChargingID1 remains unchanged. The OCS sends a response to the Credit Control Request(Initial) (CCRi) to the SMF after receiving the request and performing processing.
(9) The SMF notifies UPF2 of new charging policies, and UPF2 uses the charging policies for statistics.
(10) The SMF acquires from UPF1 user plane-related charging information such as traffic, time and events.
(11) The SMF notifies UPF1 to delete the session-related process.
(12) The SMF generates an SMF-Anchor CDR according to information acquired in the above step and sends it to the charging gateway (CG). The CDR carries UPF1 address information and ChargingID1, and the CDR is closed due to a UPF release.
(13) The SMF sends a Credit Control Request(Termination) (CCRt) carrying related charging information (the UPF1 address information, ChargingID1, SessionID1 and the like) to the OCS and terminates charging of data messages on UPF1.
   At this time, uplink and downlink data of the user are forwarded through UPF2.
(14) The UE initiates a session deletion request to the SMF through the RAN and the AMF.
(15) The SMF acquires from UPF2 the user plane-related charging information.
(16) The SMF notifies UPF2 to delete the session-related process.
(17) The SMF generates an SMF-Anchor CDR according to information acquired in the above step and sends it to the charging gateway (CG). The CDR carries UPF2 address information, and the CDR is closed due to a session release.
(18) The SMF sends a Credit Control Request(Termination) (CCRt) message carrying related charging information (SessionID2, ChargingID1, the UPF2 address information and other parameters) to the OCS and terminates the session with the OCS.
(19) The SMF sends a session deletion response to the AMF, and the AMF sends it to the UE through the RAN. The process ends.

Charging processes in a scenario of non-roaming and an uplink classifier are described below in example 6 and example 7. A process for the uplink classifier in a multi-UPF scenario does not exist in a 4G system. In the multi-UPF scenario, different charging policies may be adopted for data messages through different paths. Therefore, it is necessary to explicitly distinguish messages through the different paths in a CDR and thus a charging framework in the multi-UPF scenario is designed to separately charge based on different UPFs, and may also charge for the uplink classifier. A purpose of the charging for the uplink classifier is to satisfy operation requirements such as inter-network settlement.

Although separate charging is performed for multiple UPFs, an anchor UPF has different charging policies from a UPF serving as the uplink classifier. Online charging plus offline charging may be adopted for the anchor UPF, but only an offline CDR needs to be provided for the uplink classifier to prevent repeated charging of an OCS. The offline CDR may separately reflect traffic of the uplink classifier to different anchor UPFs. Online charging CCR messages triggered by two anchor points carry a same ChargingID and different SessionIDs, that is, the two anchor points belong to different Diameter sessions, and charging may be controlled independently.

Whether the offline CDR is provided for the uplink classifier may be implemented through charging policies or local configurations of an SMF. For example, whether the OCS is notified of a process of inserting the uplink classifier may be implemented by extending a Trigger-Type AVP. An AVP with a value of 90 and a type of "CHANGE_OF_ADD_UL CL_UPF" is added, that is, a trigger notifying a change of the uplink classifier. If the OCS delivers the Trigger-Type with the value of 90, the OCS is notified through a Credit Control Request(Update) message in the process of inserting the uplink classifier. If a Trigger-Type AVP is not extended, whether to trigger the OCS may be locally configured by the SMF.

### Example 6

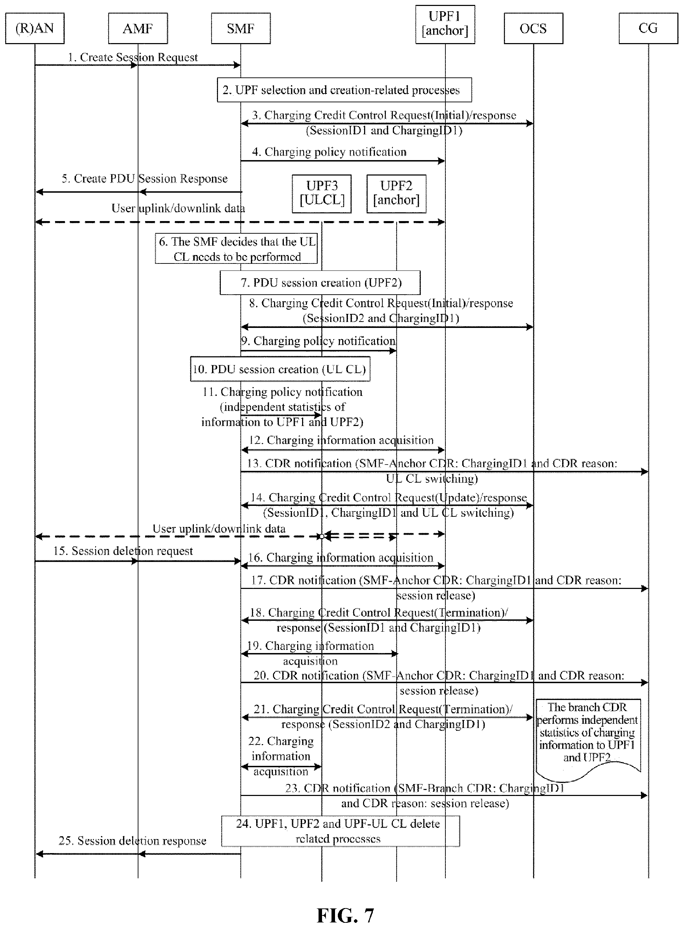

As shown in FIG. 7, in a scenario of non-roaming and an uplink classifier, when an anchor point is separate from a branch point (the uplink classifier), a charging process may include steps (1) to (25) described below.
(1) A user uses a data service, a UE initiates a Create PDU Session Request which is transferred to an SMF through a RAN and an AMF, and the SMF generates ChargingID1, SessionID1 and other data.
(2) The SMF selects a UPF according to a processing rule of the SMF and creates a user plane channel for the user.
(3) The SMF sends a Credit Control Request(Initial) (CCRi) message carrying ChargingID1, SessionID1 and other data to an OCS; after receiving the request, the OCS performs credit authorization on the user according to user information. A quota of the user, a Trigger-Type and other information are carried. The Trigger-Type delivered by the OCS in the example includes "a trigger notifying a change of the uplink classifier".
(4) After receiving a response to the Credit Control Request(Initial) (CCRi) from the OCS, the SMF notifies UPF1 of charging policies, and UPF1 performs charging according to these charging policies.
(5) The SMF sends a Create PDU Session Response to the AMF, the AMF sends the response to the UE through the RAN, and session creation is completed.
   User data messages are forwarded through RAN---UPF1.
(6) Due to a change of the service used by the user, etc., the SMF decides that a process of the UL CL needs to be performed to locally offload traffic.
(7) Under control of the SMF, a session to another anchor UPF2 is created to get connected to a local server, etc.
(8) The SMF sends a Credit Control Request(Initial) (CCRi) to re-create a session with the OCS, where a SessionID is SessionID2 and ChargingID1 remains unchanged. At this time, two sessions coexist between the SMF and the OCS. The OCS sends a response to the Credit Control Request(Initial) (CCRi) to the SMF after receiving the request and performing processing.
(9) The SMF notifies UPF2 of a new charging policy, and UPF2 uses the charging policy for statistics.
(10) The SMF controls UPF3 (ULCL) to be created.
(11) The SMF delivers charging policy information carrying a classification rule and other information to UPF3. Since UPF3 is the UL CL, a charging policy for UPF3 is only specific to information required by offline charging, and the charging policy delivered by the SMF to UPF3 indicates that independent statistics and reporting need to be performed on information from UPF3 to UPF1 and information from UPF3 to UPF2.
(12) After UPF2 and UPF3 are created successfully, the SMF acquires from UPF1 user plane-related charging information such as traffic, time and events.
(13) The SMF generates an SMF-Anchor CDR according to information acquired in the above step and sends it to a charging gateway (CG). The CDR carries UPF1 address information, ChargingID1, a CDR closure reason (UL CL switching) and the like.
(14) In the example, since the OCS delivers the Trigger-Type, the "trigger notifying the change of the uplink classifier", the SMF sends a Credit Control Request(Update) (CCRu) carrying related charging information (the UPF1 address information, ChargingID1, SessionID1, etc.) to the OCS, and the OCS redistributes information such as the quota.
   At this time, as for uplink and downlink data of the user, if a locally offloaded service is accessed, data is forwarded through a user plane channel RAN←→UPF3←→UPF2, and if a common service is accessed, data is forwarded through a user plane channel RAN←→UPF3←→UPF1; and the ULCL switching is completed.
(15) The UE initiates a session deletion request to the SMF through the RAN and the AMF.
(16) The SMF acquires from UPF1 user plane-related charging information. (The SMF may acquire from three UPFs charging information and issue CDRs in parallel. For convenience of description, a serial manner is illustrated in the drawings).
(17) The SMF generates an SMF-Anchor CDR according to information acquired in the above step and sends it to the charging gateway (CG). The CDR carries the UPF1 address information, information indicating a CDR closure, a closure reason (a session release) and the like.
(18) The SMF sends a Credit Control Request(Termination) (CCRt) message carrying related charging information (SessionID1, ChargingID1, the UPF1 address information and other parameters) to the OCS and terminates the session with the OCS.
(19) The SMF acquires from UPF2 user plane-related charging information.
(20) The SMF generates an SMF-Anchor CDR according to information acquired in the above step and sends it to the charging gateway (CG). The CDR carries UPF2 address information, information indicating a CDR closure, a closure reason (the session release) and the like.
(21) The SMF sends a Credit Control Request(Termination) (CCRt) message carrying related charging information (SessionID2, ChargingID1, the UPF2 address information and other parameters) to the OCS and terminates the session with the OCS.
(22) The SMF acquires from UPF3 user plane-related charging information.
(23) The SMF generates an SMF-Branch CDR according to information acquired in the above step and sends it to the charging gateway (CG). The CDR carries UPF3 address information, and the CDR is closed due to a session release. The SMF-Branch CDR includes traffic forwarded through RAN←→UPF3←→UPF2 and traffic forwarded through RAN←→UPF3←→UPF1.
(24) The SMF notifies UPF1, UPF2 and UPF3 to delete session-related processes, which is omitted herein.
(25) The SMF sends a session deletion response to the AMF, and the AMF sends it to the UE through the RAN. The process ends.

In the multi-anchor UPF scenario where the uplink classifier exists, when anchor switching is performed, a new anchor is inserted and an old anchor is deleted, or the old anchor is deleted and the new anchor is inserted, which belongs to a combined process of an SSC Mode and the uplink classifier and may refer to example 4, example 5 and the example.

The example is described for the scenario of the non-roaming and the uplink classifier. A processing manner is similar in a scenario of non-roaming and multi-homing.

### Example 7

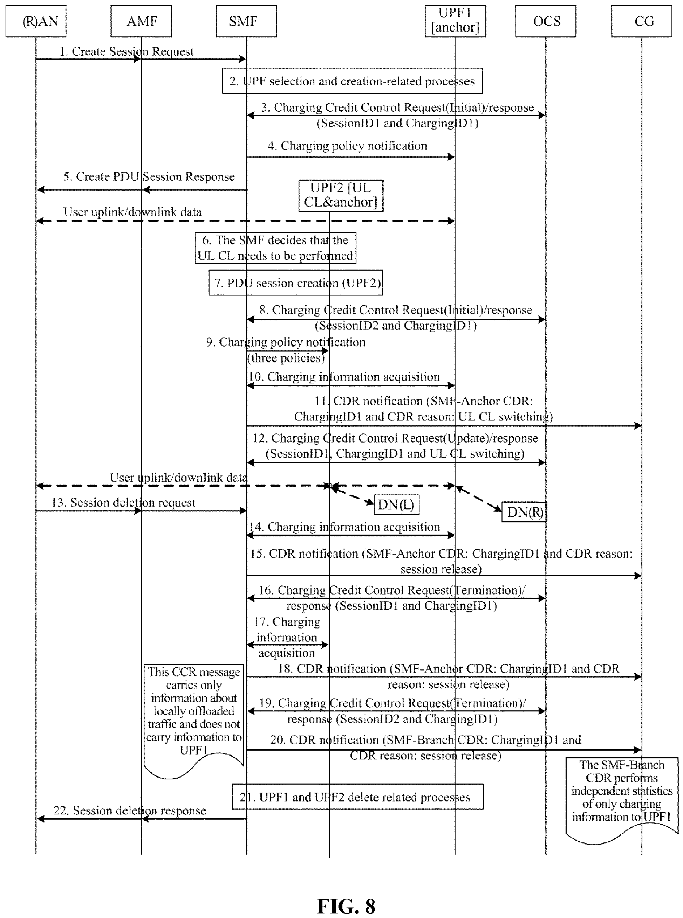

As shown in FIG. 8, in a scenario of non-roaming and an uplink classifier, when an anchor point is integrated with a branch point (the uplink classifier), a charging process may include steps (1) to (22) described below.
(1) A user uses a data service, a UE initiates a Create PDU Session Request which is transferred to an SMF through a RAN and an AMF, and the SMF generates ChargingID1, SessionID1 and other data.
(2) The SMF selects a UPF according to a processing rule of the SMF and creates a user plane channel for the user.
(3) The SMF sends a Credit Control Request(Initial) (CCRi) message carrying ChargingID1, SessionID1 and other data to an OCS; after receiving the request, the OCS performs credit authorization on the user according to user information. A quota of the user, a Trigger-Type and other information are carried. The Trigger-Type delivered by the OCS in the example includes "a trigger notifying a change of the uplink classifier".
(4) After receiving a response to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF sends the response to the UE through the RAN, and session creation is completed.
   User data messages are forwarded through RAN---UPF1.
(6) Due to a change of the service used by the user, etc., the SMF decides that a process of the UL CL needs to be performed to locally offload traffic.
(7) Under the control of the SMF, a session to another anchor UPF2 is created to get connected to a local server, etc. In the example, UPF2 serves as both an anchor point of the local server and the UL CL.
(8) Since UPF2 also serves as the anchor point, the SMF sends the Credit Control Request(Initial) (CCRi) to re-create a session with the OCS, where a SessionID is SessionID2 and ChargingID1 remains unchanged. At this time, two sessions coexist between the SMF and the OCS. The OCS sends a response to the Credit Control Request(Initial) (CCRi) to the SMF after receiving the request and performing processing.
(9) The SMF delivers charging policy information carrying a classification rule and other information to UPF2. Since UPF2 serves as both the UL CL and the anchor point, the charging policy information for UPF2 includes the following parts: an online changing policy for UPF2 as the anchor point, an offline charging policy for UPF2 as the anchor point for locally offloaded traffic, and an offline charging policy for UPF2 as the UL CL for traffic distributed to UPF1. (The example is different from example 6, UPF2 as the UL CL to locally offload traffic is completely the same as UPF2 as the anchor point to locally offload traffic, so independent statistics is no longer needed.)
(10) After UPF2 is created successfully, the SMF acquires from UPF1 user plane-related charging information such as traffic, time and events.
(11) The SMF generates an SMF-Anchor CDR according to information acquired in the above step and sends it to the charging gateway (CG). The CDR carries UPF1 address information and ChargingID1, and the CDR is closed due to UL CL switching.
(12) In the example, since the OCS delivers the Trigger-Type, the "trigger notifying the change of the uplink classifier", the SMF sends a Credit Control Request(Update) (CCRu) carrying related charging information (the UPF1 address information, ChargingID1, SessionID1, etc.) to the OCS, and the OCS redistributes information such as the quota.
   At this time, as for uplink and downlink data of the user, if a locally offloaded service is accessed, data is forwarded through a user plane channel RAN←→UPF2 to access a local data network (DN(L)), and if a common service is accessed, data is forwarded through a user plane channel RAN←→UPF2←→UPF1 to access a remote data network (DN(R)); and the UL CL switching is completed.
(13) The UE initiates a session deletion request to the SMF through the RAN and the AMF.
(14) The SMF acquires from UPF1 user plane-related charging information. (The SMF may acquire from two UPFs charging information and issue CDRs in parallel. For convenience of description, a serial manner is illustrated in the drawings).
(15) The SMF generates an SMF-Anchor CDR according to information acquired in the above step and sends it to a charging gateway (CG). The CDR carries UPF1 address information, and the CDR is closed due to a session release.
(16) The SMF sends a Credit Control Request(Termination) (CCRt) message carrying related charging information (SessionID1, ChargingID1, the UPF1 address information and other parameters) to the OCS and terminates the session with the OCS.
(17) The SMF acquires from UPF2 the user plane-related charging information.
(18) The SMF generates an SMF-Anchor CDR according to information acquired in the above step and sends it to the charging gateway (CG). The CDR carries UPF2 address information, and the CDR is closed due to the session release. This part of information is information about traffic locally offloaded through UPF2.
(19) The SMF sends a Credit Control Request(Termination) (CCRt) message carrying related charging information (SessionID2, ChargingID1, the UPF2 address information and other parameters) to the OCS and terminates the session with the OCS. This part of information is the information about traffic locally offloaded through UPF2.
(20) The SMF generates an SMF-Branch CDR and sends it to the charging gateway (CG). The CDR carries the UPF2 address information, and the CDR is closed due to the session release. This part of information is about traffic forwarded through RAN←→UPF2←→UPF1.
(21) The SMF notifies UPF1 and UPF2 to delete session-related processes, which is omitted herein.
(22) The SMF sends a session deletion response to the AMF, and the AMF sends it to the UE through the RAN. The process ends.

### Example 8

When traffic needs to be offloaded, an SMF triggers MEC by a Create PDU Session Request which carries a ChargingID generated by the SMF. At this time, a UPF serves as an anchor point for offloading traffic, a public anchor point and an uplink classifier. When the traffic is offloaded, the SMF needs to re-trigger a new session with an OCS with a different SessionID and the same ChargingID.

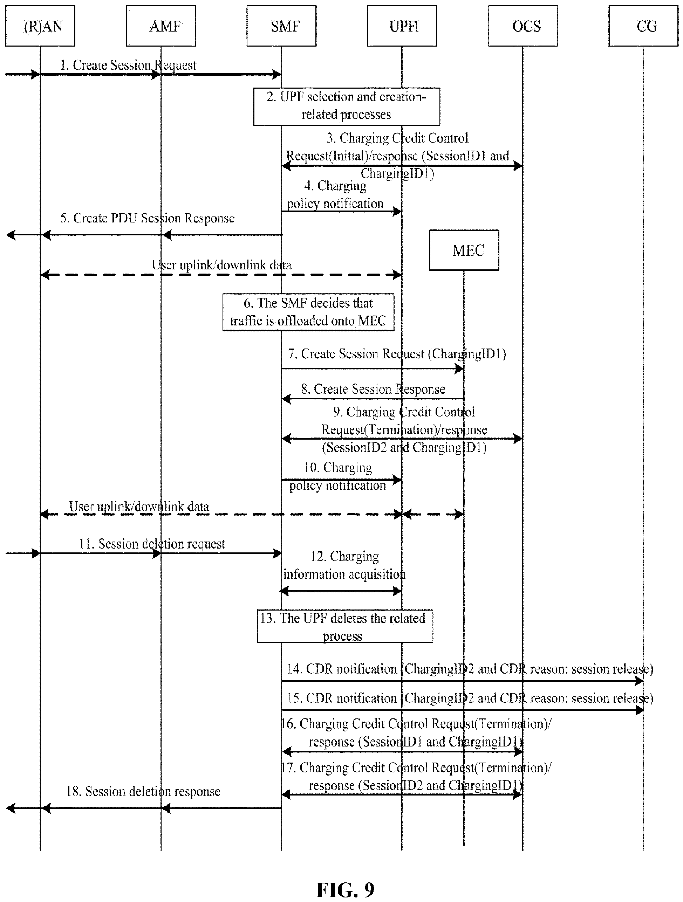

As shown in FIG. 9, a charging process in a non-roaming scenario of traffic offloaded onto the MEC may include steps (1) to (18) described below.
(1) A user uses a data service, a user equipment (UE) initiates a Create PDU Session Request which is transferred to the SMF through a RAN and an AMF, and the SMF generates ChargingID 1, SessionID1 and other data.
   A method for generating ChargingID 1 may be a method in example 1.
(2) The SMF selects a UPF and creates a user plane channel for the user.
(3) The SMF sends a Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(4) After receiving a response to the Credit Control Request(Initial) (CCRi) from the OCS, the SMF notifies the UPF of charging policies, and the UPF performs charging according to these charging policies.
(5) The SMF sends a Create PDU Session Response to the AMF, the AMF forwards the response to the UE through the RAN, and session creation is completed.
(6) The SMF decides that partial service traffic of the user needs to be offloaded onto the MEC.
(7) The SMF sends a Create PDU Session Request carrying ChargingID 1 to the MEC.
(8) The MEC returns a Create PDU Session Response, and a session to the MEC is created.
(9) After completing traffic offloading, the SMF sends a Credit Control Request(Initial) (CCRi) to re-create a session with the OCS, where a SessionID is SessionID2 and ChargingID1 remains unchanged. The SMF applies to the OCS for a new quota. The OCS sends a response to the Credit Control Request(Initial) (CCRi) to the SMF after receiving the request and performing processing.
(10) The SMF notifies the UPF of new charging policies to notify that the UPF, serving as the anchor point for offloading traffic and the public anchor point, needs to separately perform statistics of service information of the user according to policies respectively corresponding to the anchor point for offloading traffic and the public anchor point.
   At this time, as for uplink and downlink data of the user, if a locally offloaded service is accessed, data is forwarded through a user plane channel RAN←→UPF←→MEC to access a local traffic splitting server, and if a common service is accessed, data is forwarded through a user plane channel RAN←→UPF to access an external server; and a local offloading process is completed.
(11) The UE initiates a session deletion request to the SMF through the RAN and the AMF.
(12) The SMF acquires from the UPF user plane-related charging information including two pieces of independent information for the anchor point for offloading traffic and the public anchor point.
(13) The SMF notifies the UPF to delete a session-related process.
(14) The SMF generates an SMF-Anchor CDR according to information acquired in the above step and sends it to a charging gateway (CG). The CDR carries service information of the UPF as the public anchor point.
(15) The SMF generates an SMF-Anchor CDR according to information acquired in the above step and sends it to the charging gateway (CG). The CDR carries service information of the UPF as the anchor point for offloading traffic.
(16) The SMF sends a Credit Control Request(Termination) (CCRt) message carrying the service information of the UPF as the public anchor point (SessionID1 and ChargingID1) to the OCS and terminates the session with the OCS.
(17) The SMF sends a Credit Control Request(Termination) (CCRt) message carrying the service information of the UPF as the anchor point for offloading traffic (SessionID2 and ChargingID1) to the OCS and terminates the session with the OCS.
(18) The SMF sends a session deletion response to the AMF, and the AMF sends it to the UE through the RAN. The process ends.

### Example 9

In a roaming scenario, a ChargingID needs to be transferred from a home SMF (H-SMF) to a visit SMF (V-SMF). Both the V-SMF and the H-SMF issue offline CDRs whose types are an SMF-Visit CDR and an SMF-Anchor CDR. The H-SMF has an online charging interface to interact with an OCS for online charging, and the V-SMF has no online charging interface to interact with the OCS for online charging.

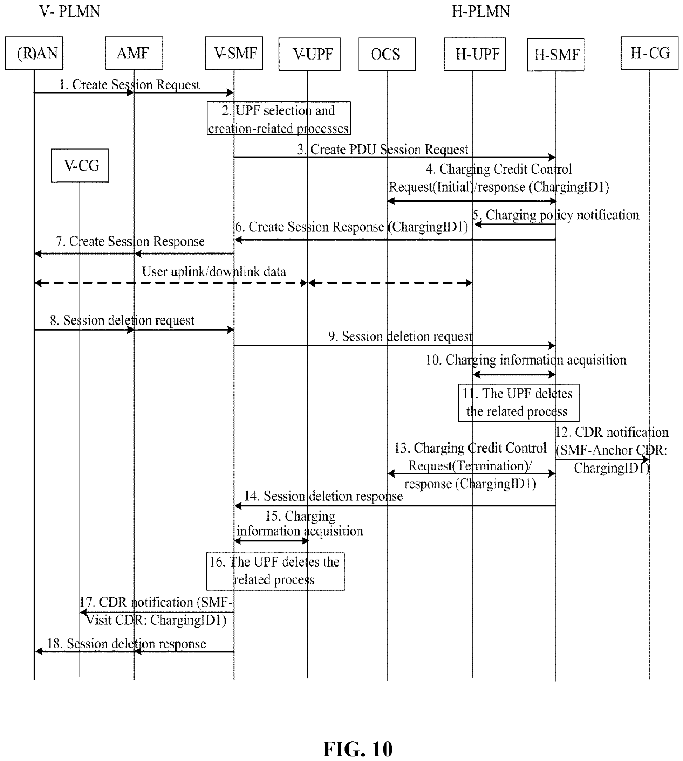

As shown in FIG. 10, a charging process in the roaming scenario may include steps (1) to (18) described below.
(1) A user uses a data service, a UE initiates a Create PDU Session Request which is sent to the visit SMF (V-SMF) through a RAN and an AMF, and the V-SMF determines that the user performs a visit access and requires a Home-routed Roaming router.
(2) The V-SMF selects a V-UPF and creates a user plane channel for the user.
(3) The V-SMF sends the Create PDU Session Request to the H-SMF.
(4) The H-SMF sends a Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
   A method for generating ChargingID 1 may be a method in example 1.
(5) After receiving a response to the Credit Control Request(Initial) (CCRi) from the OCS, the H-SMF notifies an H-UPF of charging policies, and the H-UPF performs charging according to these charging policies.
(6) The H-SMF sends a Create PDU Session Response to the V-SMF, where ChargingID 1 is carried in the response message to the V-SMF.
(7) The V-SMF sends the Create PDU Session Response to the AMF, the AMF sends the response to the UE through the RAN, and session creation is completed.
   At this time, data messages of the user are forwarded through RAN---V-UPF---H-UPF.
(8) The UE initiates a session deletion request to the V-SMF through the RAN and the AMF.
(9) The V-SMF forwards the session deletion request to the H-SMF.
(10) The H-SMF acquires from the H-UPF user plane-related charging information.
(11) The H-SMF notifies the H-UPF to delete a session-related process.
(12) The H-SMF generates an SMF-Anchor CDR according to information acquired in the above step and sends it to a charging gateway (CG). The CDR carries H-UPF address information and ChargingID1, and the CDR is closed due to a session release.
(13) The H-SMF sends a Credit Control Request(Termination) (CCRt) message carrying related charging information (SessionID1, ChargingID1, the H-UPF address information and other parameters) to the OCS and terminates the session with the OCS.
(14) The H-SMF sends a session deletion response to the V-SMF.
(15) The V-SMF acquires from the V-UPF user plane-related charging information.
(16) The V-SMF notifies the V-UPF to delete a session-related process.
(17) The V-SMF generates an SMF-Visit CDR according to information acquired in the above step and sends it to the charging gateway (CG). The CDR carries V-UPF address information and ChargingID1, and the CDR is closed due to the session release.
(18) The V-SMF sends the session deletion response to the AMF, and the AMF sends it to the UE through the RAN. The process ends.

### Example 10

In a scenario of roaming (including cross-public land mobile network (PLMN) roaming and intra-PLMN roaming) traffic locally offloaded, before traffic offloading, a V-SMF does not need to trigger an OCS for online charging; when traffic offloading is required, traffic locally offloaded needs to trigger the OCS to ensure that the OCS can monitor all services used by a user. A credit control request sent by the V-SMF to trigger the OCS carries a same ChargingID as a credit control request sent by an H-SMF and carries a different SessionID from the credit control request sent by the H-SMF.

The traffic is directly locally offloaded through a V-UPF. An offline CDR for the V-SMF needs to change from one CDR to two CDRs. Original traffic to an H-UPF is recorded in an SMF-Visit CDR. The other is a separate CDR for the traffic locally offloaded and is recorded as an SMF-Anchor CDR.

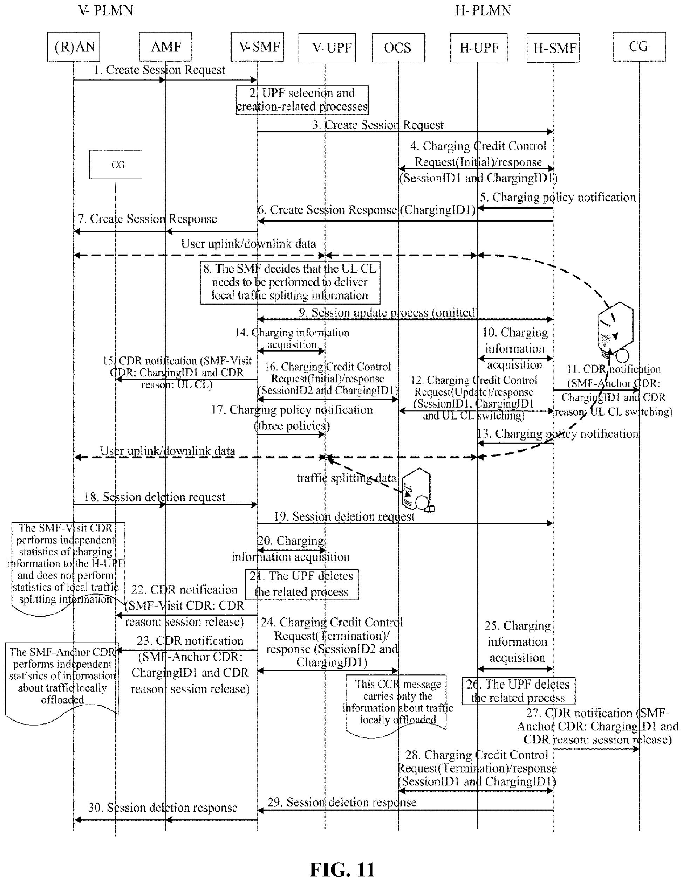

As shown in FIG. 11, in a scenario of roaming and an uplink classifier, a charging process for traffic locally offloaded may include steps (1) to (30) described below.
(1) The user uses a data service, a UE initiates a Create PDU Session Request which is sent to the SMF through a RAN and an AMF, and the SMF determines that the user performs a visit access and requires a Home-routed Roaming router.
(2) The V-SMF selects the V-UPF according to a processing rule of the V-SMF and creates a user plane channel for the user.
(3) The V-SMF sends the Create PDU Session Request to the H-SMF.
(4) The SMF sends a Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(5) After receiving a response to the Credit Control Request(Initial) (CCRi) from the OCS, the H-SMF notifies the H-UPF of charging policies, and the H-UPF performs charging according to these charging policies.
(6) The H-SMF sends a Create PDU Session Response to the V-SMF, where ChargingID 1 is carried in the response message to the V-SMF.
(7) The V-SMF sends the Create PDU Session Response to the AMF, the AMF sends the response to the UE through the RAN, and session creation is completed.
   At this time, data messages of the user are forwarded through RAN---V-UPF---H-UPF to access an external server.
(8) The V-SMF decides that a process of the uplink classifier (UL CL) needs to be performed for local traffic splitting.
(9) Since the UL CL is performed in a visit area, the V-SMF needs to trigger an update notification to H_SMF, and the subsequent processes in which the V-SMF and the H-SMF issue CDRs may be processed in parallel or in serial (a specific update process is omitted).
(10) The H-SMF acquires from the H-UPF user plane-related charging information.
(11) The H-SMF generates an SMF-Anchor CDR according to information acquired in the above step and sends it to the charging gateway (CG). The CDR carries H-UPF address information and ChargingID1, and the CDR is closed due to UL CL switching.
(12) The H-SMF sends a Credit Control Request(Update) (CCRu) message carrying related charging information (SessionID1, ChargingID1, the H-UPF address information and other parameters) to the OCS and the OCS re-delivers charging policies.
(13) The H-SMF sends new charging policies to the H-UPF.
(14) The V-SMF acquires from the V-UPF user plane-related charging information to divide a CDR.
(15) The V-SMF generates an SMF-Visit CDR according to information acquired in the above step and sends it to the charging gateway (CG). The CDR carries V-UPF address information and ChargingID1, and the CDR is closed due to the UL CL switching.
(16) Since the V-UPF also serves as a local anchor point and the OCS is not triggered before, the V-SMF sends a Credit Control Request(Initial) (CCRi) to re-create a session with the OCS, where a SessionID is SessionID2 and ChargingID1 remains unchanged. At this time, the OCS needs to perform charging on the same session through two SMFs separately. The OCS sends a response to the Credit Control Request(Initial) (CCRi) to the V-SMF after receiving the request and performing processing.
(17) The V-SMF sends new charging policies to the V-UPF. The new charging policies include three charging policies: an online charging policy for the V-UPF as an anchor point, an offline charging policy for the V-UPF as the anchor point for locally offloaded traffic, and an offline charging policy for the V-UPF as the UL CL for traffic distributed to the H-UPF.
   At this time, as for uplink and downlink data of the user, if a locally offloaded service is accessed, data is forwarded through a user plane channel RAN←→V-UPF to access a local traffic splitting server, and if a common service is accessed, data is forwarded through a user plane channel RAN←→ V-UPF←→H-UPF to access the external server; and the UL CL switching is completed.
(18) The UE initiates a session deletion request to the V-SMF through the RAN and the AMF.
(19) The V-SMF forwards the session deletion request to the H-SMF.
(20) The V-SMF acquires from the V-UPF user plane-related charging information.
(21) The V-SMF notifies the V-UPF to delete a session-related process.
(22) The V-SMF generates an SMF-Anchor CDR according to information acquired in the above step and sends it to the charging gateway (CG). The CDR carries V-UPF address information, and the CDR is closed due to a session release. This part of information is information about traffic locally offloaded through the V-UPF.
(23) The V-SMF sends a Credit Control Request(Termination) (CCRt) message carrying related charging information (SessionID2, ChargingID1, the V-UPF address information and other parameters) to the OCS and terminates the session with the OCS. This part of information is the information about traffic locally offloaded through the V-UPF.
(24) The V-SMF generates an SMF-Visit CDR and sends it to the charging gateway (CG). The CDR carries the V-UPF address information, and the CDR is closed due to the session release. This part of information is about traffic forwarded through RAN←→ V-UPF←→H-UPF.
(25) The H-SMF acquires from the H-UPF user plane-related charging information.
(26) The H-SMF notifies the H-UPF to delete a session-related process.
(27) The H-SMF generates an SMF-Anchor CDR according to information acquired in the above step and sends it to the charging gateway (CG). The CDR carries H-UPF address information and ChargingID1, and the CDR is closed due to a session release.
(28) The H-SMF sends a Credit Control Request(Termination) (CCRt) message carrying related charging information (SessionID1, ChargingID1, the H-UPF address information and other parameters) to the OCS and terminates the session with the OCS.
(29) The H-SMF sends a session deletion response to the V-SMF.
(30) The V-SMF sends the session deletion response to the AMF, and the AMF sends it to the UE through the RAN. The process ends.

### Example 11

In a scenario of roaming (including cross-PLMN roaming and intra-PLMN roaming) traffic locally offloaded, before traffic offloading, a V-SMF does not need to trigger an OCS for online charging; when traffic offloading is required, traffic locally offloaded needs to trigger the OCS to ensure that the OCS can monitor all services used by a user. A credit control request sent by the V-SMF to trigger the OCS carries a same ChargingID as a credit control request sent by an H-SMF and carries a different SessionID from the credit control request sent by the H-SMF.

In a scenario where traffic is not directly locally offloaded through the V-UPF but locally offloaded through MEC, when the traffic offloading is required, the V-SMF needs to carry the ChargingID in a Create PDU Session Request, and such field is used by the MEC according to needs to issue an offline CDR. The traffic offloaded onto the MEC is still counted by the V-SMF and the V-SMF interacts with the OCS to ensure that the OCS can correctly monitor information about all traffic used by the user.

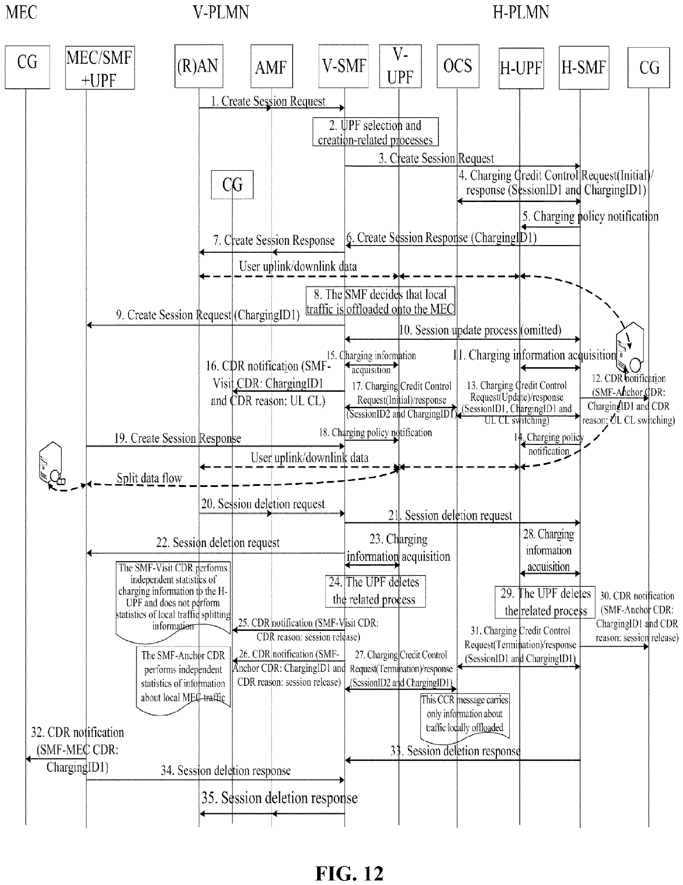

As shown in FIG. 12, in the scenario of roaming and the MEC, a charging process of traffic locally offloaded may include steps (1) to (35) described below.
(1) The user uses a data service, a UE initiates a Create PDU Session Request which is sent to the SMF through a RAN and an AMF, and the SMF determines that the user performs a visit access and requires a Home-routed Roaming router.
(2) A V-SMF selects a V-UPF according to a processing rule of the V-SMF and creates a user plane channel for the user.
(3) The V-SMF sends the Create PDU Session Request to the H-SMF.
(4) The SMF sends a Credit Control Request(Initial) (CCRi) message carrying ChargingID1, SessionID1 and other data to the OCS; after receiving the request, the OCS performs credit authorization on the user according to user information. A quota of the user, a Trigger-Type and other information are carried.
(5) After receiving a response to the Credit Control Request(Initial) (CCRi) from the OCS, the H-SMF notifies the H-UPF of charging policies, and the H-UPF performs charging according to these charging policies.
(6) The H-SMF sends a Create PDU Session Response to the V-SMF, where ChargingID1 is carried in the response message to the V-SMF.
(7) The V-SMF sends the Create PDU Session Response to the AMF, the AMF sends the response to the UE through the RAN, and session creation is completed.
   At this time, data messages of the user are forwarded through RAN---V-UPF---H-UPF to access an external server.
(8) The V-SMF decides that a process of a UL CL needs to be performed for local traffic splitting and traffic needs to be forwarded to the MEC.
(9) The V-SMF sends a Create PDU Session Request to the MEC, where the Create PDU Session Request carries ChargingID1.
(10) Since the UL CL is performed in a visit area, the V-SMF needs to trigger an update notification to H_SMF, and the subsequent processes in which the V-SMF and the H-SMF issue CDRs may be processed in parallel or in serial (a specific update process is omitted).
(11) The H-SMF acquires from the H-UPF user plane-related charging information.
(12) The H-SMF generates an SMF-Anchor CDR according to information acquired in the above step and sends it to a charging gateway (CG). The CDR carries H-UPF address information and ChargingID1, and the CDR is closed due to UL CL switching.
(13) The H-SMF sends a Credit Control Request(Update) (CCRu) message carrying related charging information (SessionID1, ChargingID1, the H-UPF address information and other parameters) to the OCS and the OCS re-delivers charging policies.
(14) The H-SMF sends new charging policies to the H-UPF.
(15) The V-SMF acquires from the V-UPF user plane-related charging information to divide a CDR.
(16) The V-SMF generates an SMF-Visit CDR according to information acquired in the above step and sends it to the charging gateway (CG). The CDR carries V-UPF address information and ChargingID1, and the CDR is closed due to the UL CL switching.
(17) Although the V-SMF re-initiates a session creation to the MEC for a traffic offloading process, considering that the MEC generally does not completely access a data center, the V-UPF is still used as the anchor point for charging of the offloaded traffic in the present application. Since the V-UPF also serves as a local anchor point and the OCS is not triggered before, the SMF sends a Credit Control Request(Initial) (CCRi) to re-create a session with the OCS, where a SessionID is SessionID2 and ChargingID1 remains unchanged. At this time, the OCS needs to perform charging on the same session through two SMFs separately. The OCS sends a response to the Credit Control Request(Initial) (CCRi) to the V-SMF after receiving the request and performing processing.
(18) The V-SMF sends new charging policies to the V-UPF. The new charging policies include three charging policies: an online charging policy for the V-UPF as the anchor point, an offline charging policy for the V-UPF as the anchor point for traffic offloaded onto MEC, and an offline charging policy for the V-UPF as the UL CL for traffic distributed to the H-UPF.
(19) The MEC sends a Create PDU Session Response message to the V-SMF.
   At this time, as for uplink and downlink data of the user, if a locally offloaded service is accessed, data is forwarded through a user plane channel RAN←→V-UPF←→MEC to access a local traffic splitting server, and if a common service is accessed, data is forwarded through a user plane channel RAN←→V-UPF←→H-UPF to access the external server; and the UL CL switching is completed.
(20) The UE initiates a session deletion request to the V-SMF through the RAN and the AMF.
(21) The V-SMF forwards the session deletion request to the H-SMF.
(22) The V-SMF forwards the session deletion request to the MEC. (The V-SMF, the H-SMF and the MEC may issue CDRs in parallel or in serial. A one-to-one description in the present application does not represent a necessary order.)
(23) The V-SMF acquires from the V-UPF user plane-related charging information.
(24) The V-SMF notifies the V-UPF to delete a session-related process.
(25) The V-SMF generates an SMF-Anchor CDR according to information acquired in the above step and sends it to the charging gateway (CG). The CDR carries V-UPF address information, and the CDR is closed due to a session release. This part of information is information about traffic locally offloaded through the V-UPF.
(26) The V-SMF sends a Credit Control Request(Termination) (CCRt) message carrying related charging information (SessionID2, ChargingID1, the V-UPF address information and other parameters) to the OCS and terminates the session with the OCS. This part of information is the information about traffic locally offloaded through the V-UPF.
(27) The V-SMF generates an SMF-Visit CDR and sends it to the charging gateway (CG). The CDR carries the V-UPF address information, and the CDR is closed due to the session release. This part of information is about traffic forwarded through RAN←→ V-UPF←→H-UPF.
(28) The H-SMF acquires from the H-UPF user plane-related charging information.
(29) The H-SMF notifies the H-UPF to delete a session-related process.
(30) The H-SMF generates an SMF-Anchor CDR according to information acquired in the above step and sends it to the charging gateway (CG). The CDR carries H-UPF address information and ChargingID1, and the CDR is closed due to a session release.
(31) The H-SMF sends a Credit Control Request(Termination) (CCRt) message carrying related charging information (SessionID1, ChargingID1, the H-UPF address information and other parameters) to the OCS and terminates the session with the OCS.
(32) The MEC generates an SMF-MEC CDR and sends it to the charging gateway (CG). The CDR carries MEC address information, and the CDR is closed due to the session release. This part of information is information about traffic locally offloaded through RAN←→ V-UPF←→MEC.
(33) The H-SMF sends a session deletion response to the V-SMF.
(34) The MEC sends the session deletion response to the V-SMF.
(35) The V-SMF sends the session deletion response to the AMF, and the AMF sends it to the UE through the RAN. The process ends.

## Claims

1. A charging method, which is applied to a session management function, SMF, comprising:
creating (s210) a session with an online charging system, OCS, by the SMF, for each of a plurality of user plane functions, UPFs, which carry user equipment service traffic, and assigning different session identifiers and a unified charging identifier to sessions with a charging association; and
sending (s220) an online charging message to the OCS for any one session in the sessions with the charging association, wherein the online charging message carries a session identifier of the any one session and the charging identifier;
**characterized in that**, the unified charging identifier comprises, a charging identifier sequence number and an identifier of a network element which creates the charging identifier sequence number.

2. The charging method of claim 1, wherein the sessions with the charging association comprise:
in a scenario of a service session connection, SSC, mode 2 or an SSC mode 3, a first session corresponding to a first anchor UPF before session switching and a second session corresponding to a second anchor UPF after the session switching.

3. The charging method of claim 2, further comprising:
sending, by the SMF, offline charging bills to a charging gateway, CG, separately for the first session and the second session with the charging association to count traffic information before the session switching and traffic information after the session switching separately.

4. The charging method of claim 1, wherein the sessions with the charging association comprise:
in a scenario of non-roaming and an uplink classifier, sessions corresponding to a plurality of anchor UPFs carrying service traffic split by the uplink classifier.

5. The charging method of claim 4, further comprising:
in response to determining that the SMF receives trigger indication information sent by the OCS and a trigger corresponding to the trigger indication information is related to notifying the OCS of a change of the uplink classifier, or the SMF is locally configured with a service rule for notifying the OCS of the change of the uplink classifier, after inserting the uplink classifier, notifying, by the SMF, the OCS that the uplink classifier has been inserted for an uplink service, and receiving a new traffic quota re-delivered by the OCS for a session that already exists before the uplink classifier is inserted.

6. The charging method of claim 4, further comprising:
sending, by the SMF, an offline charging bill to a CG, for each of the sessions with the charging association to count information about traffic carried by each of the plurality of anchor UPFs.

7. The charging method of claim 4, further comprising:
sending, by the SMF, an offline charging bill to a CG, for the uplink classifier to count information about traffic assigned by the uplink classifier to each of the plurality of anchor UPFs.

8. The charging method of claim 1, wherein the sessions with the charging association comprise:
in a scenario of non-roaming traffic offloaded onto a mobile edge computing, MEC, a first session corresponding to a first anchor UPF carrying a part of service traffic and a second session corresponding to a second UPF serving as the MEC and carrying the other part of the service traffic.

9. The charging method of claim 1, wherein the sessions with the charging association comprise:
in a scenario of roaming traffic locally offloaded through a visit anchor UPF, a first session corresponding to a home anchor UPF carrying partial roaming traffic and a second session corresponding to the visit anchor UPF carrying the roaming traffic locally offloaded in a roaming area.

10. The charging method of claim 1, wherein the sessions with the charging association comprise:
in a scenario of roaming traffic locally offloaded through MEC in a roaming area, a first session corresponding to a home anchor UPF carrying partial roaming traffic and a second session corresponding to the MEC in the roaming area carrying the roaming traffic locally offloaded in the roaming area.

11. The charging method of claim 9, further comprising:
in response to determining that the SMF is a visit SMF, sending, by the visit SMF, an offline charging bill to a CG to count information about the roaming traffic carried by the home anchor UPF and information about the roaming traffic locally offloaded through the visit anchor UPF; or
in response to determining that the SMF is a home SMF, sending, by the home SMF, an offline charging bill to a CG to count information about the roaming traffic carried by the home anchor UPF.

12. The charging method of claim 10, further comprising:
in response to determining that the SMF is a visit SMF, sending, by the visit SMF, an offline charging bill to a CG to count information about the roaming traffic carried by the home anchor UPF and information about the roaming traffic locally offloaded through the MEC in the roaming area; or
in response to determining that the SMF is a home SMF, sending, by the home SMF, an offline charging bill to a CG to count information about the roaming traffic carried by the home anchor UPF.

13. A session management function, comprising:
a memory, a processor and a charging program stored in the memory and executable by the processor, wherein the charging program, when executed by the processor, implements the charging method of any one of claims 1 to 12.

14. A computer-readable storage medium, which is configured to store a charging program which, when executed by a processor, implements the charging method of any one of claims 1 to 12.

## Patentansprüche

1. Abrechnungsverfahren, das auf eine Sitzungsmanagementfunktion, SMF, angewandt wird, umfassend:
Erzeugen (s210) einer Sitzung mit einem Online-Abrechnungssystem, OCS, durch die SMF für jede einer Vielzahl von Benutzerebenenfunktionen, UPFs, die Benutzergerät-Dienstverkehr führen, und Zuweisen unterschiedlicher Sitzungskennungen und einer einheitlichen Abrechnungskennung zu Sitzungen mit einer Abrechnungsassoziierung; und
Senden (s220) einer Online-Abrechnungsnachricht an das OCS für eine beliebige Sitzung in den Sitzungen mit der Abrechnungsassoziierung, wobei die Online-Abrechnungsnachricht eine Sitzungskennung der beliebigen Sitzung und eine Abrechnungskennung trägt;
**dadurch gekennzeichnet, dass** die einheitliche Abrechnungskennung eine Abrechnungskennung-Sequenznummer und eine Kennung eines Netzwerkelements umfasst, das die Abrechnungskennung-Sequenznummer erzeugt.

2. Abrechnungsverfahren nach Anspruch 1, wobei die Sitzungen mit der Abrechnungsassoziierung Folgendes umfassen:
in einem Szenario einer Dienstsitzungsverbindung, SSC, Modus 2 oder einer SSC Modus 3, eine erste Sitzung, die einer ersten Anker-UPF vor Sitzungsvermittlung entspricht, und eine zweite Sitzung, die einer zweiten Anker-UPF nach Sitzungsvermittlung entspricht.

3. Abrechnungsverfahren nach Anspruch 2, ferner umfassend:
Senden von Offline-Abrechnungen durch die SMF an ein Abrechnungs-Gateway, CG, separat für die erste Sitzung und die zweite Sitzung mit der Abrechnungsassoziierung, um Verkehrsinformationen vor der Sitzungsvermittlung und Verkehrsinformationen nach der Sitzungsvermittlung separat zu zählen.

4. Abrechnungsverfahren nach Anspruch 1, wobei die Sitzungen mit der Abrechnungsassoziierung Folgendes umfassen:
in einem Szenario mit Nicht-Roaming und einem Uplink-Klassifizierer, Sitzungen, die einer Vielzahl von Anker-UPFs entsprechen, die durch den Uplink-Klassifizierer aufgeteilten Dienstverkehr führen.

5. Abrechnungsverfahren nach Anspruch 4, ferner umfassend:
als Reaktion auf ein Bestimmen, dass die SMF von der OCS gesendete Auslöseranzeigeinformationen empfängt und ein den Auslöseranzeigeinformationen entsprechender Auslöser mit der Benachrichtigung des OCS über eine Änderung des Uplink-Klassifizierers zusammenhängt, oder die SMF lokal mit einer Dienstregel zur Benachrichtigung der OCS über die Änderung des Uplink-Klassifizierers konfiguriert ist, nach Einfügen des Uplink-Klassifizierers, Benachrichtigen des OCS durch die SMF, dass der Uplink-Klassifizierer für einen Uplink-Dienst eingefügt wurde, und Empfangen eines neuen Verkehrskontingents, das von dem OCS für eine Sitzung, die bereits vor dem Einfügen des Uplink-Klassifizierers besteht, erneut zugestellt wird.

6. Abrechnungsverfahren nach Anspruch 4, ferner umfassend:
Senden einer Offline-Abrechnungsrechnung durch die SMF an einen CG für jede der Sitzungen mit der Abrechnungsassoziierung, um Informationen über den Verkehr zu zählen, der von jeder der Vielzahl Anker-UPFs übertragen wird.

7. Abrechnungsverfahren nach Anspruch 4, ferner umfassend:
Senden einer Offline-Abrechnungsrechnung durch die SMF an einen CG, damit der Uplink-Klassifizierer Informationen über den Verkehr zählen kann, der durch den Uplink-Klassifizierer jedem der mehreren Anker-UPF zugewiesen wurde.

8. Abrechnungsverfahren nach Anspruch 1, wobei die Sitzungen mit der Abrechnungsassoziierung Folgendes umfassen:
in einem Szenario mit Nicht-Roaming-Verkehr, der auf ein Mobile Edge Computing, MEC, verlagert wird, eine erste Sitzung, die einer ersten Anker-UPF entspricht, die einen Teil des Dienstverkehrs trägt, und eine zweite Sitzung, die einer zweiten UPF entspricht, die als MEC dient und den anderen Teil des Dienstverkehrs trägt.

9. Abrechnungsverfahren nach Anspruch 1, wobei die Sitzungen mit der Abrechnungsassoziierung Folgendes umfassen:
in einem Szenario, in dem Roaming-Verkehr lokal über einen Besuchsanker UPF ausgelagert wird, eine erste Sitzung, die einer Heimatanker-UPF entspricht, die einen Teil des Roaming-Verkehrs überträgt, und eine zweite Sitzung, die der Besuchsanker-UPF entspricht, die den lokal in einem Roaming-Gebiet ausgelagerten Roaming-Verkehr überträgt.

10. Abrechnungsverfahren nach Anspruch 1, wobei die Sitzungen mit der Abrechnungsassoziierung Folgendes umfassen:
in einem Szenario, in dem Roaming-Verkehr lokal durch MEC in einem Roaming-Gebiet ausgelagert wird, eine erste Sitzung, die einer Heimatanker-UPF entspricht, die einen Teil des Roaming-Verkehrs überträgt, und eine zweite Sitzung, die dem MEC in dem Roaming-Gebiet entspricht, die den lokal in dem Roaming-Gebiet ausgelagerten Roaming-Verkehr überträgt.

11. Abrechnungsverfahren nach Anspruch 9, ferner umfassend:
als Reaktion auf ein Bestimmen, dass die SMF eine Besuchs-SMF ist, Senden einer Offline-Abrechnung durch die Besuchs-SMF an eine CG, um Informationen über den Roaming-Verkehr, der von dem Heimatanker-UPF übertragen wird, und Informationen über den Roaming-Verkehr, der lokal durch den Besuchsanker-UPF ausgelagert wird, zu zählen; oder
als Reaktion auf ein Bestimmen, dass die SMF eine Heim-SMF ist, Senden einer Offline-Abrechnung durch die Heim-SMF an ein CG, um Informationen über den Roaming-Verkehr zu zählen, der von der Heimanker-UPF übertragen wird.

12. Abrechnungsverfahren nach Anspruch 10, ferner umfassend:
als Reaktion auf ein Bestimmen, dass die SMF eine Besuchs-SMF ist, Senden einer Offline-Abrechnung durch die Besuchs-SMF an eine CG, um Informationen über den Roaming-Verkehr, der von dem Heimatanker-UPF übertragen wird, und Informationen über den Roaming-Verkehr, der lokal durch das MEC in dem Roaming-Gebiet entladen wird, zu zählen; oder
als Reaktion auf ein Bestimmen, dass die SMF eine Heim-SMF ist, Senden einer Offline-Abrechnung durch die Heim-SMF an ein CG, um Informationen über den Roaming-Verkehr zu zählen, der von der Heimanker-UPF übertragen wird.

13. Sitzungsmanagementfunktion, umfassend:
einen Speicher, einen Prozessor und ein in dem Speicher gespeichertes und von dem Prozessor ausführbares Ladeprogramm, wobei das Ladeprogramm, wenn es von dem Prozessor ausgeführt wird, das Ladeverfahren nach einem der Ansprüche 1 bis 12 implementiert.

14. Computerlesbares Speichermedium, das konfiguriert ist, um ein Ladeprogramm zu speichern, das, wenn es von einem Prozessor ausgeführt wird, das Ladeverfahren nach einem der Ansprüche 1 bis 12 implementiert.

## Revendications

1. Procédé de facturation, qui est appliqué à une fonction de gestion de session, SMF, comprenant :
créer (s210) une session avec un système de facturation en ligne, OCS, par la SMF, pour chacune d'une pluralité de fonctions de plan d'utilisateur, UPF, qui transportent le trafic de service d'équipement d'utilisateur, et attribuer différents identifiants de session et un identifiant de facturation unifié aux sessions avec une association de facturation ; et
envoyer (s220) un message de facturation en ligne à l'OCS pour une session quelconque parmi les sessions avec l'association de facturation, dans lequel le message de facturation en ligne porte un identifiant de session de la session quelconque et l'identifiant de facturation ;
**caractérisé en ce que** l'identifiant de facturation unifié comprend un numéro de séquence d'identifiant de facturation et un identifiant d'un élément de réseau qui crée le numéro de séquence d'identifiant de facturation.

2. Procédé de facturation de la revendication 1, dans lequel les sessions avec l'association de facturation comprennent :
dans un scénario de connexion de session de service, SSC, mode 2 ou une SSC mode 3, une première session correspondant à une première UPF d'ancrage avant la commutation de session et une deuxième session correspondant à une deuxième UPF d'ancrage après la commutation de session.

3. Procédé de facturation selon la revendication 2, comprenant en outre les étapes suivantes :
envoyer, par la SMF, des factures de facturation hors ligne à une passerelle de facturation, CG, séparément pour la première session et la deuxième session avec l'association de facturation pour compter séparément les informations de trafic avant la commutation de session et les informations de trafic après la commutation de session.

4. Procédé de facturation de la revendication 1, dans lequel les sessions avec l'association de facturation comprennent :
dans un scénario de non-itinérance et avec un classificateur de liaison montante, des sessions correspondant à une pluralité d'UPF d'ancrage transportant un trafic de service divisé par le classificateur de liaison montante.

5. Procédé de facturation selon la revendication 4, comprenant en outre les étapes suivantes :
en réponse à la détermination du fait que la SMF reçoit des informations d'indication de déclenchement envoyées par l'OCS et qu'un déclencheur correspondant aux informations d'indication de déclenchement est lié à la notification à l'OCS d'un changement du classificateur de liaison montante, ou que la SMF est configurée localement avec une règle de service pour notifier à l'OCS le changement du classificateur de liaison montante, après avoir inséré le classificateur de liaison montante, notifier, par la SMF, à l'OCS que le classificateur de liaison montante a été inséré pour un service de liaison montante, et recevoir un nouveau quota de trafic à nouveau délivré par l'OCS pour une session qui existe déjà avant l'insertion du classificateur de liaison montante.

6. Procédé de facturation selon la revendication 4, comprenant en outre les étapes suivantes :
envoyer, par la SMF, une facture de facturation hors ligne à une CG, pour chacune des sessions avec l'association de facturation pour compter les informations sur le trafic transporté par chacune de la pluralité d'UPF d'ancrage.

7. Procédé de facturation selon la revendication 4, comprenant en outre les étapes suivantes :
envoyer, par la SMF, une facture de facturation hors ligne à une CG, pour que le classificateur de liaison montante compte les informations sur le trafic attribué par le classificateur de liaison montante à chacune de la pluralité d'UPF d'ancrage.

8. Procédé de facturation de la revendication 1, dans lequel les sessions avec l'association de facturation comprennent :
dans un scénario de trafic non itinérant déchargé sur un mobile edge computing, MEC, une première session correspondant à une première UPF d'ancrage transportant une partie du trafic de service et une deuxième session correspondant à une deuxième UPF servant de MEC et transportant l'autre partie du trafic de service.

9. Procédé de facturation de la revendication 1, dans lequel les sessions avec l'association de facturation comprennent :
dans un scénario de trafic itinérant déchargé localement par un UPF d'ancrage de visite, une première session correspondant à un UPF d'ancrage d'origine transportant un trafic itinérant partiel et une deuxième session correspondant à l'UPF d'ancrage de visite transportant le trafic itinérant déchargé localement dans une zone d'itinérance.

10. Procédé de facturation de la revendication 1, dans lequel les sessions avec l'association de facturation comprennent :
dans un scénario de trafic d'itinérance déchargé localement par l'intermédiaire du MEC dans une zone d'itinérance, une première session correspondant à un UPF d'ancrage d'origine transportant un trafic d'itinérance partiel et une deuxième session correspondant au MEC dans la zone d'itinérance transportant le trafic d'itinérance déchargé localement dans la zone d'itinérance.

11. Procédé de facturation selon la revendication 9, comprenant en outre les étapes suivantes :
en réponse à la détermination que la SMF est une SMF de visite, envoyer par la SMF de visite, une facture de facturation hors ligne à une CG pour compter les informations sur le trafic d'itinérance transporté par l'UPF d'ancrage d'origine et les informations sur le trafic d'itinérance déchargé localement par le biais de l'UPF d'ancrage de visite ; ou
en réponse à la détermination que la SMF est une SMF d'origine, envoyer, par la SMF d'origine, une facture de facturation hors ligne à une CG pour compter les informations sur le trafic d'itinérance transporté par l'UPF d'ancrage d'origine.

12. Procédé de facturation selon la revendication 10, comprenant en outre les étapes suivantes :
en réponse à la détermination que la SMF est une SMF de visite, envoyer, par la SMF de visite, une facture de facturation hors ligne à une CG pour compter les informations sur le trafic d'itinérance transporté par l'UPF d'ancrage d'origine et les informations sur le trafic d'itinérance déchargé localement par l'intermédiaire du MEC dans la zone d'itinérance ; ou
en réponse à la détermination que la SMF est une SMF d'origine, envoyer, par la SMF d'origine, une facture de facturation hors ligne à une CG pour compter les informations sur le trafic d'itinérance transporté par l'UPF d'ancrage d'origine.

13. Une fonction de gestion de session, comprenant :
une mémoire, un processeur et un programme de facturation stocké dans la mémoire et exécutable par le processeur, dans lequel le programme de facturation, lorsqu'il est exécuté par le processeur, met en oeuvre le procédé de facturation de l'une quelconque des revendications 1 à 12.

14. Support de stockage lisible par ordinateur, configuré pour stocker un programme de facturation qui, lorsqu'il est exécuté par un processeur, met en oeuvre le procédé de facturation selon l'une quelconque des revendications 1 à 12.
